Europäisches Patentamt

European Patent Office

Office européen des brevets

(19)

(11) Veröffentlichungsnummer: **0 257 575**

**A1**

(12) **EUROPÄISCHE PATENTANMELDUNG**

(21) Anmeldenummer: **87112137.2**

(22) Anmeldetag: **21.08.87**

(51) Int. Cl.⁴: **F17D 5/02**

(30) Priorität: **21.08.86 DE 3628336**

(43) Veröffentlichungstag der Anmeldung:
**02.03.88 Patentblatt 88/09**

(84) Benannte Vertragsstaaten:
**AT BE CH DE ES FR GB IT LI NL SE**

(71) Anmelder: **Röro Gesellschaft für Isolier-und Fernheiztechnik mbH**
**Am Märzrasen**
**D-6405 Eichenzell 2(DE)**

(72) Erfinder: **Müller, Michael**
**Gieselbachweg 16**
**D-6400 Fulda(DE)**

(74) Vertreter: **Missling, Arne, Dipl.-Ing.**
**Patentanwälte Dipl.-Ing. R. Schlee Dipl.-Ing.**
**A. Missling Bismarckstrasse 43**
**D-6300 Giessen(DE)**

(54) **Rohrleitungssytem und wärmeisolierte Rohre, z.B. für Fernheizleitungen.**

(57) Wärmeisolierte Rohre, die z.B. für Fernheizleitungen eingesetzt werden, haben ein Leitungsrohr, das von einem Isoliermantel umschlossen ist, in dem zwei Überwachungsleitungen eingebettet sind. Für die einwandfreie und eindeutige Ortung von Fehlern sowohl in den Haupt-wie auch in den Abzweigleitungen auch außerhalb der Muffenbereiche sind die erste und die zweite Leitung (8, 9) mit Abstand zueinander angeordnet, wobei die erste Leitung (8) über die Länge des Rohres isoliert und die zweite Leitung (9) über die Länge des Rohres blank ist. Die erste isolierte Leitung (8) weist an ihren Enden einen in den Muffenbereich (11) reichenden leitenden Abschnitt (12) auf.

EP 0 257 575 A1

## Rohrleitungssystem und wärmeisolierte Rohre, z.B. für Fernheizleitungen

Die Erfindung betrifft wärmeisolierte Rohre, z.B. für Fernheizleitungen, mit einem Leitungsrohr, das von einem Isoliermantel umgeben ist, in dem Überwachungsleitungen eingelassen sind, sowie aus diesen Rohrleitungen hergestellte Rohrleitungssysteme.

Rohrleitungen der eingangs genannten Art, die z.B. für eine Fernheizleitungssystem eingesetzt sind, bedürfen der ständigen Überwachung auf evtl. Undichtigkeiten, und zwar sowohl im Hinblick auf Undichtigkeiten der das Medium führenden Rohr als auch der Dichtheit des Isoliermantels gegen Eindringen von Feuchtigkeit von außen.

Zur Überwachung der Dichtheit der Rohrleitungen sind in diesen elektrisch leitende Drähte eingelassen, die zum einen dazu dienen, um evtl. Unterbrechungen festzustellen, die in der Regel bei einer Beschädigung des Isoliermantels eintreten, oder auch dazu, um im Bereich der Verbindungsstellen der einzelnen Rohrleitungsabschnitte, d.h. im Muffenbereich, Undichtigkeiten festzustellen. Für die Feststellung der Undichtigkeiten werden Widerstandsmessungen durchgeführt, wobei zur Ortung des Fehlers in den Rohrleitungen die Impuls-Reflektometrie (Zeit-Bereich-Reflektometer) eingesetzt wird. Diese Impuls-Reflektometrie erlaubt die Lokalisierung von Kabel-oder Leitungsschäden. Ein Impuls oder eine Impulskette wird laufend in die zu messende Leitung geschickt. Trifft der Impuls auf eine Störung, z.B. einen Leitungskurzschluß, oder aber auf eine Abnormalität im Widerstand, so wird ein Impuls zum Ausgang zurückreflektiert. Dort wird er in Phase, Zeit und Amplitude mi dem Originalimpuls verglichen. Aus dem Vergleich der beiden Impulse kann die Entfernung zur Störstelle berechnet werden. Diese Art der Entfernungsmessung der Störstelle von dem Standpunkt des Meßbeginns aus ist ausreichend genau, um einen bestimmten Bereich für das Freigraben der Rohrleitung festzulegen. Bekannt ist es, in den Isoliermantel der isolierten Rohre zwei isolierte Drähte einzubetten, die miteinander verdrillt sind und die im Muffenbereich, d.h. im Bereich der Verbindungsstelle zweier Rohrabschnitte miteinander, nicht isoliert sind. Mit diesem bekannten System ist es zum einen möglich, Unterbrechungen in den elektrischen Meßleitungen sowie auch Feuchtigkeitsanreicherungen in den Muffenbereichen festzustellen. Diese Überwachungseinrichtung ist jedoch nicht geeignet, auch Feuchtigkeitseinbrüche in den Rohrabschnitten festzustellen sowie, sofern Abzweigungen von der Hauptleitung vorhanden sind, festzustellen, ob die mit dem Reflektometer gemessene Störstelle nun in der Abzweigleitung oder aber in der Hauptleitung liegt. Dies bedingt eine relativ teure Fehlersuche, da die in der Hauptleitung vermutete Störstelle in der Abzweigleitung liegen kann. Des weiteren werden Feuchtigkeitseinbrüche in den Rohrabschnitten nicht festgestellt, was einen erheblichen Mangel des bekannten Systems bedeutet.

Der Erfindung liegt die Aufgabe zugrunde, wärmeisolierte Rohre der eingangs genannten Art sowie ein Rohrleitungssystem so auszubilden, daß auch Fehler wie Feuchtigkeitseinbrüche in den Haupt-und Abzweigleitungen außerhalb der Muffenbereiche feststellbar sind, daß ein Fehler auch insofern zweifelsfrei geortet werden kann, ob dieser in der Haupt-oder in der Abzweigleitung, und weiterhin, ob dieser Fehler im Muffenbereich oder im Rohrbereich liegt. Eine weitere Aufgabe der Erfindung besteht darin, die wärmeisolierten Rohre bzw. das Rohrleitungssystem so auszubilden, daß diese von Störströmen und von Fremdpotentialeinflüssen frei sind.

Diese Aufgabe wird mit den Merkmalen des Anspruches 1 bzw. des Anspruches 3 gelöst.

Gemäß der Erfindung weist somit ein wärmeisoliertes Rohr zumindest zwei über die Länge des Rohres verlaufende Leitungen auf, von denen die eine Leitung über die Länge des Rohres isoliert ist, während die andere Leitung blank ist. Hierbei weist die isolierte Leitung an ihren Enden, d.h. in den Verbindungsstellen der einzelnen Rohrabschnitte untereinander, einen abisolierten Abschnitt auf, der bei der Verbindung der wärmeisolierten Rohre zu einem Rohrleitungssystem unisoliert bleibt.

Vorteilhaft ist in das wärmeisolierte Rohr eine dritte, ebenfalls blanke Leitung eingezogen, die in einem Abstand sowohl zu der zweiten blanken Leitung wie auch zu dem das Medium führenden Leitungsrohr angeordnet ist. Durch die Verwendung einer dritten blanken Leitung in dem wärmeisolierten Rohr kann die Messung potentialfrei und frei von Fremdströmen durchgeführt werden, da die dritte Leitung zur Vergleichsmessung herangezogen werden kann und nicht, wie dies bisher der Fall ist, als Referenzleitung das Leitungsrohr selber genommen werden muß.

Bei der Verbindung der Rohrleitungsabschnitte untereinander werden jeweils die entsprechenden Leitungen miteinander verbunden, wobei im Muffenbereich die isolierte erste Leitung ihre abisolierte Stelle beibehält, so daß im Muffenbereich alle drei Leitungen eine blanke abisolierte Stelle aufweisen. In einem fertiggestellten Leitungssystem werden am Ende der Hauptleitung die entsprechenden Leitungen, d.h. die erste und zweite Leitung des Vorlaufs, mit der entsprechenden ersten und zweiten Leitung des Rücklaufs verbunden. Zweigen von der Hauptleitung Abzweigleitungen ab, so wird die dritte Leitung der Abzweigleitung mit der dritten Leitung der Hauptleitung verbunden. Die erste und zweite Leitung der Abzweigleitung werden jeweils mit den freien Enden der blanken zweiten Leitung der Hauptleitung verbunden. Die Enden der ersten und zweiten Leitung in den Abzweigleitungen werden miteinander verbunden und in einer Abzweigdose herausgeführt. Durch diese Art der Verbindung der Leitungen untereinander wird erreicht, daß sowohl die erste Leitung als auch die zweite Leitung über den Vor-und Rücklauf geschlossen ist. Hierbei ist die erste Leitung nur über die Hauptleitung geführt, während die zweite Leitung auch eine Schleife durch die jeweiligen Abzweigleitungen ausführt.

Mittels der beiden ersten Leitungen und dem Leitungsrohr bzw. vorteilhaft mit der dritten Leitung können nun unabhängig voneinander Widerstandsmessungen durchgeführt werden. Tritt z.B. eine Unterbrechung in der nicht isolierten zweiten Leitung ein, während die erste Leitung keine Unterbrechung aufweist, so kann in Verbindung mit der Impuls-Reflektometrie und der Feststellung des Abstandes des Schadens festgestellt werden, ob der Schaden noch in der Hauptleitung oder aber bereits in der Abzweigleitung liegt. Durch Feuchtigkeit hervorgerufene Schäden sowohl in der Haupt-als auch in der Abzweigleitung können durch Vergleichsmessungen von erster zu dritter Leitung wie zweiter zu dritter Leitung wie auch durch Messungen von erster und zweiter Leitung zueinander in einfacher Weise lokalisiert und festgestellt werden. Zeigt sich z.B. eine Widerstandsänderung zwischen der zweiten blanken Leitung und der dritten Leitung, während eine solche Widerstandsmessung zwischen der ersten isolierten Leitung und der dritten blanken Leitung nicht gemessen werden kann, so handelt es sich hier um einen Feuchtigkeitseinbruch oder um eine sonstige Beschädigung in einem Rohrleitungsabschnitt. Kann jedoch eine solche Widerstandsänderung sowohl zwischen der ersten isolierten Leitung und der dritten blanken Leitung wie auch zwischen der zweiten blanken Leitung wie auch der dritten blanken Leitung ermittelt werden, so wird es sich hier um eine Störung in einem Muffenabschnitt handeln, denn nur in diesem Muffenabschnitt weist auch die erste, ansonsten isolierte Leitung einen blanken Abschnitt auf. Des weiteren können ergänzende Messungen zwischen der ersten und der zweiten Leitung vorgenommen werden.

Sollte sich herausstellen, daß der Fehler in einer Abzweigleitung liegt, so kann auch in dieser Leitung durch Messungen bestimmt werden, ob der Fehler im Muffenbereich oder aber im Rohrabschnittsbereich liegt, und zwar dadurch, daß die in der Regel miteinander verbundenen Enden der ersten und zweiten Leitung in den Abzweigleitungen geöffnet werden und von diesen Enden aus die notwendigen Messungen durchgeführt werden. Mittels der erfindungsgemäß ausgebildeten Rohrleitungen sowie der Rohrleitungssysteme lassen sich Fehler im Muffenbereich wie auch in den Rohrabschnitten, die standardisierte Längen von 6, 12 oder 18 m aufweisen können, einwandfrei lokalisieren, so daß die für die Reparatur erforderlichen Erdarbeiten auf das unbedingt notwendige Minimum beschränkt werden können.

Ein Ausführungsbeispiel der Erfindung ist im folgenden anhand der Zeichnung näher beschrieben, in dieser zeigen:

Fig. 1 die Enden zweier miteinander verbundener erfindungsgemäßer wärmeisolierter Rohre,

Fig. 2 einen Querschnitt durch ein erfindungsgemäß ausgebildetes wärmeisoliertes Rohr,

Fig. 3 ein mit den erfindungsgemäßen wärmeisolierten Rohren aufgebautes Rohrleitungssystem mit Vor-und Rücklauf und

Fig. 4 in vergrößerter Darstellung die Hauptleitung mit einer abgehenden Abzweigleitung.

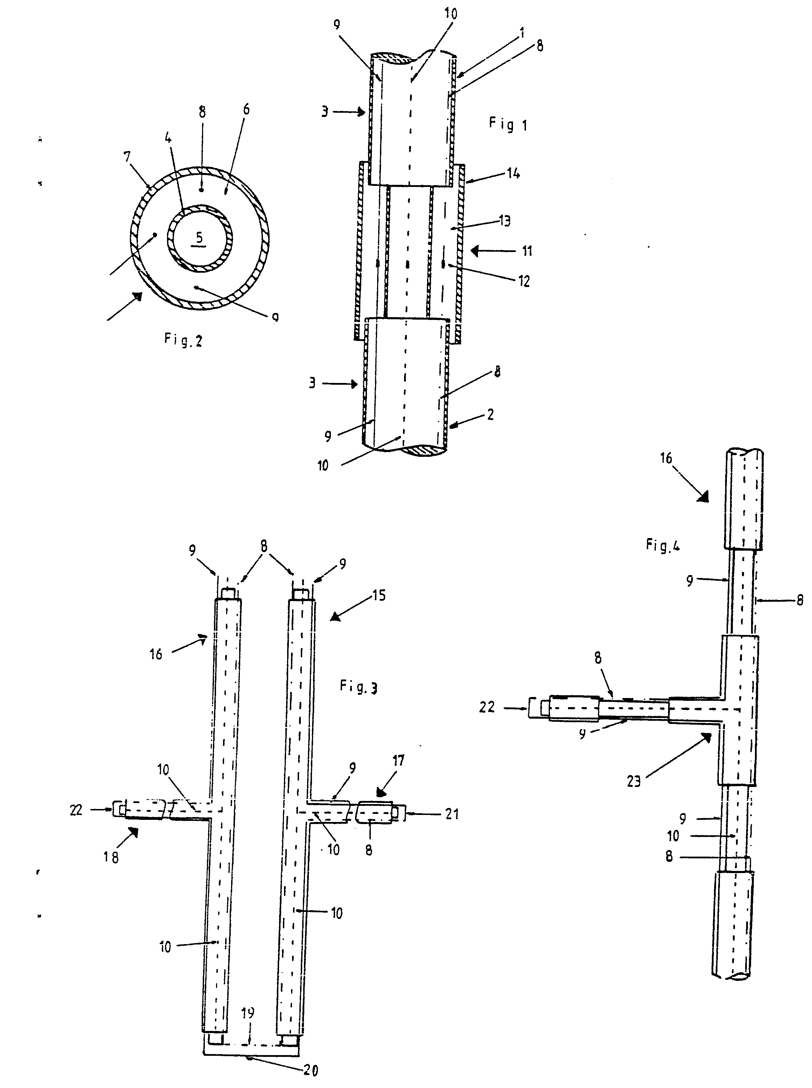

In Fig. 2 sind die Enden 1, 2 zweier erfindungsgemäßer wärmeisolierter Rohre 3 miteinander zu einem Rohrleitungssystem verbunden dargestellt.

Das Rohr 3 besteht aus einem inneren Leitungsrohr 4, durch das das Medium 5 geführt wird. Das Leitungsrohr 4 ist von einem Isoliermantel 6 umgeben, der außen von einem wasserdichten Mantel 7 umschlossen ist.

In den Isoliermantel 6 des Rohres 3 sind eine erste isolierte Leitung 8 sowie eine zweite blanke Leitung 9 und eine dritte blanke Leitung 10 eingebettet.

Wie Fig. 1 zeigt, sind im Muffenbereich 11, in dem die beiden Leitungsrohre 4 der Rohre 3 miteinander verbunden sind, die entsprechenden Leitungen 8, 9 und 10 miteinander verbunden. Die Leitungen 8 und 9 sind im Muffenbereich 11 gleichermaßen blank, wie in dem übrigen Bereich des Rohres 3. Die isolierte erste Leitung 8, die über die gesamte Länge des Rohres 3 isoliert ist, ist im Verbindungsbereich, d.h. im Muffenbereich 11, über einen bestimmten Bereich 12 abisoliert, so daß im Muffenbereich 11 der in diesem Bereich eingebrachte Isoliermantel 13, der von einer Hülle 14 umgeben ist, zum einen auf Feuchtigkeit hin überwacht werden kann und zum anderen eine Lokalisierung der entsprechenden Schadensstelle, wie dies zuvor dargelegt worden ist, möglich ist.

In Fig. 3 ist ein Vorlauf 15 und ein Rücklauf 16 dargestellt, wobei vom Vor-und Rücklauf jeweils eine Abzweigleitung 17, 18 fortführt. Die Muffenbereiche, d.h. die einzelnen Verbindungsstellen der Rohrabschnitte, sind nicht im einzelnen eingezeichnet, Aus dieser Zeichnung ergibt sich, daß die erste isolierte Leitung 8 ausschließlich durch die Hauptleitung, d.h. durch den Vor-und Rücklauf 15, 16 geführt ist, wobei die entsprechenden Enden über eine Verbindungsschleife 19 miteinander verbunden sind. Die zweiten Leitungen 9 sind desgleichen am Ende des Vor-und Rücklaufs über eine Verbindungsschleife 20 miteinander verbunden. Diese Leitungen 9 sind jedoch im Bereich der Abzweigleitungen 17, 19 aufgetrennt und an die entsprechenden ersten und zweiten Leitungen 8, 9 in der Abzweigleitung angeschlossen, so daß auch die zweiten Leitungen 9 über Verbindungsschleifen 21, 22 an den Enden der Abzweigleitungen 17, 18 miteinander verbunden sind und ein geschlossenes System bilden. Anhand des Rücklaufs 16 ist das Verbindungsschema in Fig. 4 in vergrößerter Darstellung gezeigt, wobei hier gleichfalls eine T-förmige Verbindungsmuffe 23 dargestellt ist, die die gleiche Drahtanordnung wie die Rohre 3 aufweist. Die dritten Leitungen 10 in den Rohren des Vor-und Rücklaufs sind hingegen nicht miteinander verbunden. Diese bilden so jeweils zu dem Vor-und Rücklauf wie auch für die jeweilige Abzweigleitung ein offenes System.

Mit den erfindungsgemäß ausgebildeten wärmeisolierten Rohren sowie mit den entsprechend dem Rohrleitungssystem verschalteten Rohren ist es somit möglich, festzustellen, ob ein Fehler im Muffenbereich oder im Rohrbereich vorliegt und des weiteren, ob dieser in der Hauptleitung oder in den Abzweigleitungen auftritt. Des weiteren gestattet die erfindungsgemäße Einrichtung, sofern diese einen dritten, blanken Leiter aufweist, ein Messen, das frei von äußeren Potentialeinflüssen ist, so daß Meßverfälschungen, wie sie bisher zu beobachten sind, vermieden werden.

## Ansprüche

1. Wärmeisolierte Rohre, z.B. für Fernheizleitungen, mit einem Leitungsrohr, das von einem Isoliermantel umschlossen ist, in dem zwei Überwachungsleitungen eingebettet sind, dadurch gekennzeichnet, daß die erste und die zweite Leitung (8, 9) mit Abstand zueinander angeordnet sind, daß die erste Leitung (8) über die Länge des Rohres isoliert und die zweite Leitung (9) über die Länge des Rohres blank ist und daß die erste isolierte Leitung an ihren beiden Enden einen in den Muffenbereich (11) reichenden leitenden Abschnitt (12) aufweist.

2. Rohre nach Anspruch 1, dadurch gekennzeichnet, daß mit Abstand zur ersten und zweiten Leitung und zum Leitungsrohr eine dritte, blanke Leitung in den Isoliermantel (6) eingebettet ist.

3. Rohrleitungssystem mit wärmeisolierenden Rohren nach Anspruch 1, mit Haupt-und Abzweigleitungen, dadurch gekennzeichnet, daß in der Stoßstelle (11) zweier Rohrabschnitte, d.h. im Muffenbereich und im Endbereich von Vor-und Rücklauf (15, 16) die jeweils einander zugeordneten isolierten (8) und nicht isolierten (9) Leitungen miteinander verbunden sind, daß in den Abzweigungen die Enden der ersten und zweiten Leitungen (8, 9) jeweils an die Enden der zweiten Leitung (9) der Hauptleitung angeschlossen sind und daß die Enden der ersten und zweiten Leitungen (8, 9) in den Abzweigleitungen (17, 18) miteinander verbunden sind und daß die dritte (10) der Abzweigleitungen (17, 18) mit der dritten Leitung (10) der zugehörigen Hauptleitung (15, 16) verbunden ist.

Fig 1

Fig.2

Fig.3

Fig.4

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int. Cl.3) |
|---|---|---|---|
| X | DE-A-2 413 345 (RASMUSSEN)<br>* Seite 5, Zeile 1- Seite 6, Zeile 22; Seite 10, Zeilen 1-11 * | 1,2 | F 17 D   5/02 |
| A | | 3 | |
| | --- | | |
| A | DE-A-1 814 857 (SIEMENS)<br>* Patentanspruch; Unteranspruch 1 * | 1 | |
| | --- | | |
| A | PATENT ABSTRACTS OF JAPAN, Band 6, Nr. 126 (M-142)[1004], 10. Juli 1982; & JP - A - 57 51619 (KUBOTA TEKKO) 26.03.1982 | 1 | |
| | --- | | |
| A | GB-A-1 311 472 (RASMUSSEN)<br>* Anspruch 1; Figur 1 * | 1,3 | |
| | --- | | |
| A | EP-A-0 108 861 (FELTEN & GUILLEAUME)<br>----- | | |
| | | | **RECHERCHIERTE SACHGEBIETE (Int. Cl.3)**<br><br>F 16 L   55/00<br>F 17 D    5/00 |

Der vorliegende Recherchenbericht wurde für alle Patentansprüche erstellt

| Recherchenort | Abschlußdatum der Recherche | Prüfer |
|---|---|---|
| BERLIN | 17-11-1987 | SCHAEFFLER C.A.A. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angefzhrtes Dokument
.............................................
& : Mitglied der gleichen Patentfamilie, übereinstimmendes Dokument

EPO FORM 1503 03.82 (P0403)